Europäisches Patentamt

European Patent Office

Office européen des brevets

(11) Publication number: **0 422 903 A2**

## (12) EUROPEAN PATENT APPLICATION

(21) Application number: 90311061.7

(22) Date of filing: 09.10.90

(51) Int. Cl.5: **B29C 45/14**, B29C 45/32

(30) Priority: 09.10.89 JP 117999/89

(43) Date of publication of application:
17.04.91 Bulletin 91/16

(84) Designated Contracting States:
BE CH DE ES FR GB IT LI NL

(71) Applicant: YOSHIDA KOGYO K.K.
No. 1 Kanda Izumi-cho Chiyoda-ku
Tokyo(JP)

(72) Inventor: Shunji, Akashi
67-3, Tateno, Kurobe-shi
Toyama-ken(JP)

(74) Representative: White, Martin David et al
MARKS & CLERK 57/60 Lincoln's Inn Fields
London WC2A 3LS(GB)

(54) Injection molding apparatus for slide fastener chain.

(57) Continuous injection molding apparatus for slide fastener chains. According to a preferred embodiment, this apparatus comprises single stationary mold and two movable molds. The stationary mold is provided with a sprue contacted with a nozzle of an injection cylinder. These three molds are disposed so that the opposed parting planes of the three molds are parallel each other. Then, the sprue is communicated with each row of cavities, through each runner or through each runner and each path. The fastener tapes are transported intermittently in spaces formed between the molds respectively in a longitudinal direction. The molten material is shot from the injection cylinder to the sprue and is injected into the rows of cavities between two molds of these three molds through the runner or through the runner and the path respectively. Then, the pairs of rows of fastener elements are molded from the molten material in the rows of cavities and attached simultaneously to the beaded edges. As a result, the plural number of slide fastener chains can be produced by one-shot injection with this apparatus having a normal area of longitudinal cross section.

# INJECTION MOLDING APPARATUS FOR SLIDE FASTENER CHAIN

## Background of the Invention

### 1. Field of the Invention

This invention relates to continuous injection molding apparatus for slide fastener chains which molds pairs of rows of interengaging elements and which attaches simultaneously said pairs of rows of interengaging elements to pairs of beaded edges of pairs of fastener tapes or to pairs of strings.

### 2. Prior Art

In prior art, for producing interengaging fastener elements of synthetic resin by injection molding, for example, apparatus disclosed in USP No. 3097395 was known. This conventional apparatus includes a pair of molds. A molten synthetic resin material is shot from an injection cylinder and injected, through a sprue and a runner, into a pair of rows of cavities formed between the molds. Then, the rows of fastener elements are molded to be attached to a pair of fastener tapes, which are intermittently transported every one-shot injection through a space between the molds. However, when this apparatus is used, only one pair of rows of fastener elements can be molded by the one-shot injection resulting in low productivity.

On the other hand, in order to progress the productivity, injection molding apparatus, by which two or three pairs of rows of fastener element are molded simultaneously to be attached to fastener tapes, are proposed in USP No. 2440960 and USP No. 2497951. According to each conventional apparatus, for molding the two or three pairs of rows of fastener elements, two or three rows of mold cavities are formed between single stationary mold and single movable mold. However, these conventional molding apparatus require large scaled mechanisms for closing the molds, because the parting planes of the molds must be broad due to the two or three pairs of the rows of cavities. Thus, a normal sized injection molding machine can not be applied.

## Summary of the Invention

It is therefore a main object of the present invention to provide injection molding apparatus for a slide fastener chain, which can be applied for a normal sized injection molding machine and by which the fastener elements can be molded to be attached to the fastener tapes with high-productivity

According to the present invention, continuous injection molding apparatus for slide fastener chains is provided. This apparatus molds pairs of rows of interengaging elements from a molten material of synthetic resin or metal, which is injected into at least two rows of cavities between molds respectively. Simultaneously, this apparatus attaches said pairs of rows of interengaging elements to pairs of beaded edges of pairs of fastener tapes or to pairs of strings. The fastener tapes or the strings are transported intermittently in spaces formed between the molds respectively in a longitudinal direction. This apparatus comprises single stationary mold and at least two movable molds. The stationary mold is provided with a sprue, which is contacted with a nozzle of an injection cylinder. These at lest three molds are disposed so that the opposed parting planes of the molds are parallel each other. Then, the sprue is communicated with each row of cavities, through each runner.

The molten material is shot from the injection cylinder to the sprue in the stationary mold and is injected into the rows of cavities between two molds of these molds through the runners respectively. Then, the pairs of rows of fastener elements are molded from the molten material in the rows of cavities and attached simultaneously to the beaded edges or the strings. As a result, the plural number of slide fastener chains or pairs or rows of fastener elements attached to the strings are produced by one-shot injection with this apparatus.

Although this apparatus can mold plural number of rows of fastener elements and attach them to the beaded edges or the strings, the longitudinal cross section of a mold unit having these molds are not required to be larger than that of conventional molding apparatus. Therefore, apparatus of the present invention can be used in the normal sized injection molding machine. Further, plural numbers of rows of fastener elements can be molded and attached to the beaded edges or the strings by one-shot injection, thus, high productivity and low cost can be attained by this invention.

Further objects and advantages of the present invention will be apparent from the following description, reference being had to the accompanying drawing wherein preferred embodiments of the present invention are clearly shown.

## Brief Description of the Drawings

Fig. 1 is a perspective view of an important part of injection molding apparatus of first embodiment;

Fig. 2 is a perspective view of a molded substance immediately after molding of fastener elements;

Fig. 3 is a perspective view of a slide fastener chain;

Fig. 4 is a perspective view of a modified slide fastener chain in which fastener elements are attached to strings;

Fig. 5 is a cross sectional view of a mold unit of first embodiment when molds are closed;

Fig. 6 is a cross sectional view of a mold unit of first embodiment when molds are opened;

Fig. 7 is a cross sectional view of a part of a mold unit showing operation removing molded substances from molds;

Fig. 8 is a cross sectional view of a mold unit of second embodiment when molds are closed.

## Description of the Preferred Embodiment

Now, the present invention is described more particularly, referring to the drawings.

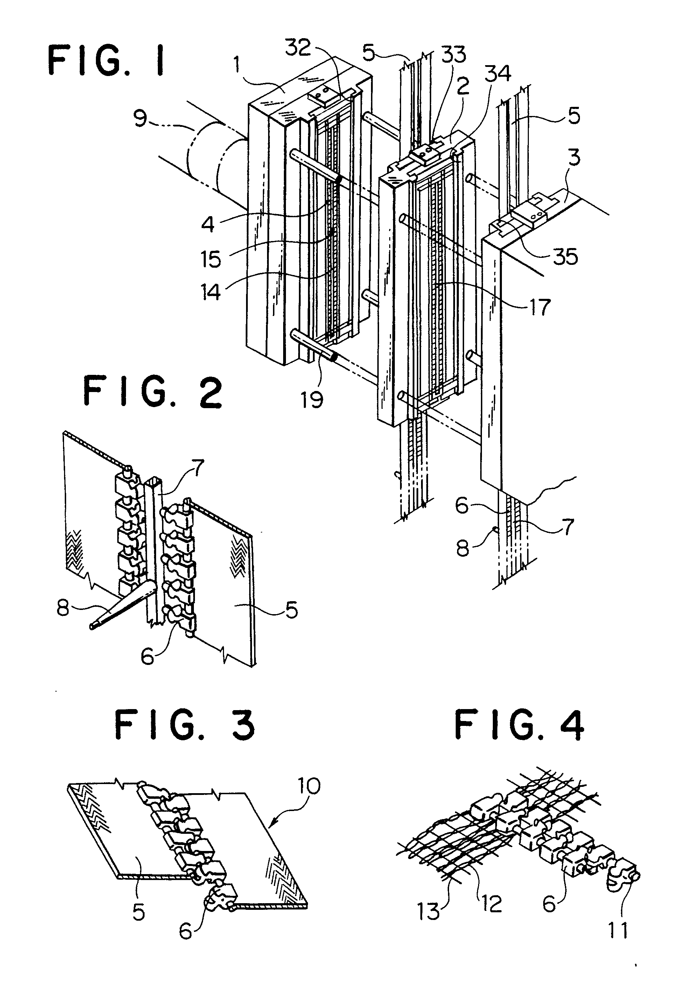

As shown in Fig. 1, injection molding apparatus of first embodiment comprises a first mold 1, a second mold 2 and a third mold 3, which are disposed so that their parting planes 32, 33, 34, 35 are parallel each other. Then, in this embodiment, the first mold 1 is a stationary mold and the second mold 2 and the third mold 3 are movable molds. A molten material of synthetic resin or metal is shot from an injection cylinder 9 to a sprue 15 in the stationary first mold 1 and is injected into row of cavities 4 between the first mold 1 and the second movable mold 2 through a runner 14, and is injected into row of cavities 4 between the second mold 2 and the third mold 3 through a path formed so as to go through the second mold 2 and through a runner 14. Then, two pairs of rows of fastener elements 6, 6 are molded in the two rows of cavities 4,4 and attached simultaneously to two pairs of beaded edges of two pairs of fastener tapes 5, 5 or the strings 11, 11. As a result, two pairs of slide fastener chains 10, 10 or two pairs of rows of fastener elements 6, 6 attached to the two pairs of strings 11, 11 are produced by one-shot injection with this apparatus.

This injection molding apparatus of the first embodiment related to the present invention can be applied to a conventional injection molding machine. That is to say, an injection mechanism, a mechanism for closing the molds 1, 2 and 3 and an oil hydraulic mechanism for driving and controlling them are the same structures as the conventional mechanisms respectively. Therefore, they are not shown in the drawings and not explained.

Now, a mold unit having the molds 1, 2 and 3 of this apparatus, by which the present invention is characterized, is disclosed.

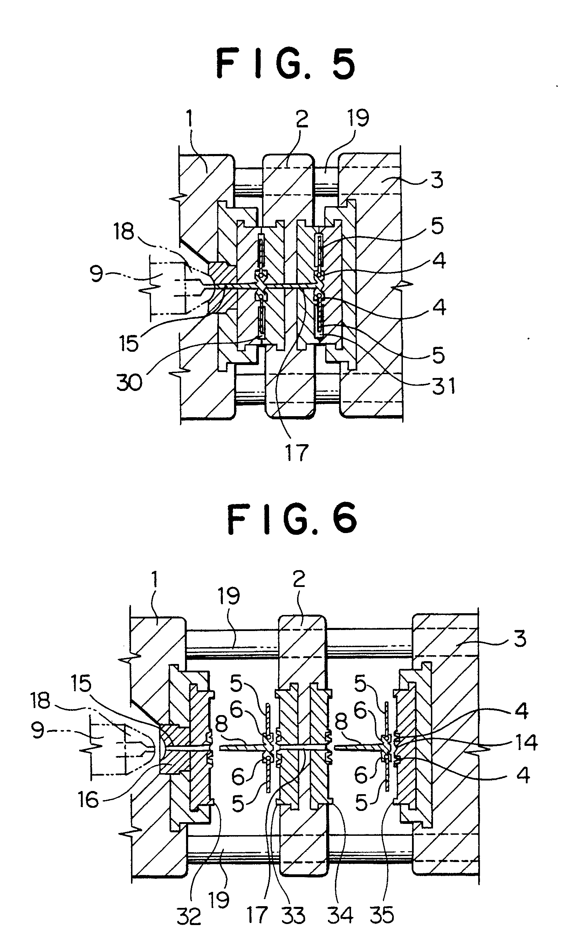

As shown in Figs. 1 and 6, the first mold 1, the second mold 2 and the third mold 3, are disposed so that their parting planes 32, 33, 34, 35 are parallel each other. In order to mold the plural number of pairs (in this embodiment, two pairs) of rows of fastener elements 6, 6, the plural number of (in this embodiment, two) rows of mold cavities 4, 4 are formed between the two molds ( in this embodiment, between the first mold 1 and the second mold 2 and between the second mold 2 and the third mold 3). The sprue 15 is provided so as to go through the first mold 1 from a nozzle 18 of the injection cylinder 9 to the runner 14 formed on the parting plane-side of the first mold 1. The path 17 of the molten material is provided so as to go through the second mold 2 from the first mold-side of the second mold 2 to the runner 14 formed on the third mold-side of the second mold 2. That is to say, the sprue 15 and the path 17 are on one-line so as to go through the molds 1, 2 and to be communicated with the rows of cavities 4, 4 through the runners 14, 14 respectively. The molten material of synthetic resin or metal is shot from the injection cylinder 9 and injected into the two rows of cavities 4, 4, formed between the first mold 1 and the second mold 2 and between the second mold 2 and the third mold 3, through the sprue 15 and the runner 14, and through the path 17 and the runner 14, respectively. As a result, the two pairs of rows of fastener elements 6, 6 are simultaneously molded and attached to two pairs of fastener tapes 5, 5 along their beaded edges respectively or to two pairs of rows of fastener elements attached to the two pairs of strings 11, 11, while the two pairs of fastener tapes 5, 5 or the two pairs of strings 11, 11 are transported downwards in a longitudinal direction of the rows of fastener elements 6 until they are set in a space 30 formed between the first mold 1 and the second mold 2 and in another space 31 formed between the second mold 2 and the third mold 3 respectively. Each space 30, 31 can be adjusted so as to transport the strings 11 as well as the fastener tapes 5. That is to say, in case of pair of fastener tapes 5, each space 30, 31 is adjusted to be communicated with each row of cavities 4 through a portion where the pair of beaded edges of the pair of fastener tapes 5 are threaded. On the other hand, in case of each pair of strings 11, each space 30, 31 is adjusted to be a portion of each row of cavities 4.

The first mold 1 is fixed on the support frame of the mold unit. As shown in Fig. 5, the molten synthetic resin material (or the molten metal material) is shot from the nozzle 18 of the injection cylinder 9, which is provided at the face being opposite to the parting plane 32 (Fig. 6) of the first mold 1. Then, while the nozzle 18 of the cylinder 19 is moved to be contacted with the sprue 15, the molten material is injected, through the sprue 15 and the runner 14, and through the path 17 and the runner 14, into the rows of cavities 4, 4 respectively. As shown in Fig. 1, four guide rods 19, 19 are projected from the four corners of the parting plane 32 of the first mold 1. When the molds 1, 2 and 3 are moved transversely and relatedly for closing and opening the rows of cavities 4, the guide rods 19, 19 go through the four corners of second mold 2 and through the four corners of third mold 3 in order to guide the molds 1, 2 and 3 precisely. If the sprue 15 of the first mold 1 was brought into contact directly with the nozzle 18 of the injection cylinder 9, the sprue 15 would wear out due to a friction caused between the sprue 15 and the nozzle 18. Therefore, a nozzle-bush 16 is preferably provided so as to form the sprue 15.

As shown in Fig. 6, the rows of cavities 4, 4 for molding the rows of fastener elements 6, 6 are formed by mating the parting plane 32 of the first mold 1 with the first mold-side parting plane 33 of the second mold 2 and by mating the third mold-side parting plane 34 of the second mold 2 with the parting plane 35 of the third mold 3 respectively. The runners 14, 14 formed on both side faces of the second mold 2 are communicated each other through the path 17. The sprue 15 and the path 17 are located on one-line so as to form a continuous path. As shown in Fig. 5, when the second mold 2 and the third mold 3 move to be brought into contact with the first mold 1 and the second mold 2 respectively, the molten synthetic resin material (or the molten metal material) is shot from the injection cylinder 9 and is injected, through the sprue 15 of the first mold 1 and the path 17 of the second mold 2, into the row of cavities 4 formed between the first mold 1 and the second mold 2 and into the row of cavities 4 formed between the second mold 2 and the third mold 3 respectively.

The structure of each mold is the same as that of a movable mold of a pair of conventional molds.

First, as shown in Fig. 1, when the molds 1, 2 and 3 are opened, the pair of fastener tapes 5 and the other pair of fastener tapes 5 are transported downward until they are set in the space 30 between the first mold 1 and the second mold 2 and the space 31 between the second mold 2 and the third mold 3 respectively.

Next, as shown in Fig. 5, by the mechanism (not shown) for closing the molds 1, 2 and 3, the molds 1, 2 and 3 are moved to be closed relatedly so that two pairs of parting planes 32, 33, 34, 35 are brought into contact each other. The pairs of the parting planes are as follows; one pair is the plane 32 of the first mold 1 and the first mold-side plane 33 of the second mold 2. Then, another pair is the third mold-side plane 34 of the second mold 2 and the plane 35 of the third mold 3.

By the injection mechanism, the molten synthetic resin material (or the molten metal material) is shot from the nozzle 18 of the injection cylinder 9 to be injected into the sprue 15, and the path 17, which are formed to be the continuous path in the first mold 1 and the second mold 2, as described before. Through the continuous path, the molten material is injected to be filled in the row of cavities 4 formed between the first mold 1 and the second mold 2 and to be filled in the row of cavities 4 formed between the second mold 2 and the third mold 3 respectively. Then, the two pairs of rows of fastener elements 6 are molded to be attached to the two pairs of fastener tapes 5, 5 along their beaded edges.

After the fastener elements 6, 6 are cooled to be solidified, the molds 1, 2 and 3 are opened. For this opening, a molded piece 8 in the path 17 is removed from a molded piece 8 in the sprue 15 by moving the third mold 3 apart from the second mold 2. Then, the tip end of the molded piece 8 in the sprue 15 is removed from the nozzle 18 of the injection cylinder 9 by moving the second mold 2 apart from the first mold 1.

As shown in Fig. 2, immediately after molding of one-shot injection, the pair of rows of molded fastener elements 6 in the row of the cavities 4 and the molded piece 8 in the sprue 15 or in the path 17 as well as molded piece 7 in the runner 14 form a molded substance integrally with a pair of fastener tapes 5.

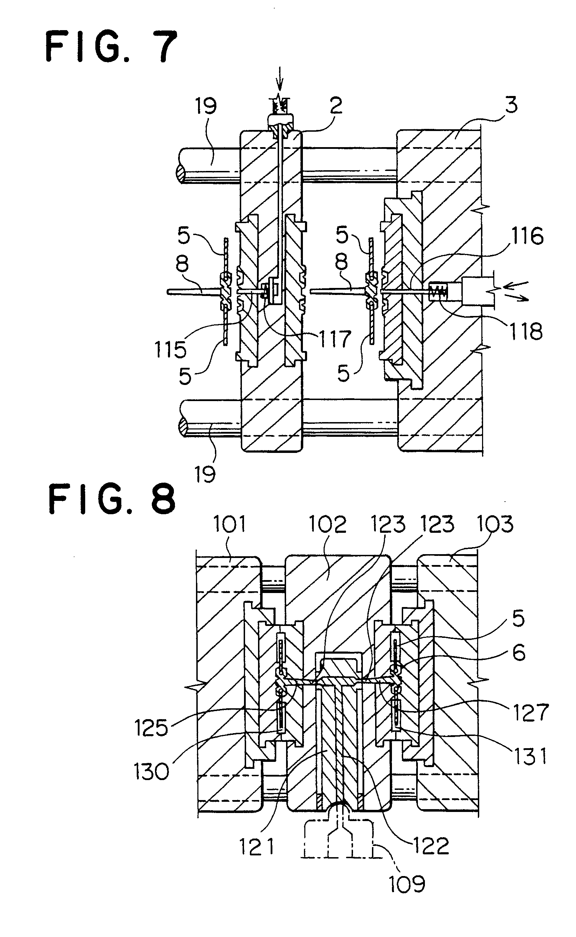

As shown in Fig. 6, the molded substance formed by the first mold 1 and the second mold 2 and the molded substance formed by the second mold 2 and the third mold 3 are removed from the second mold 2 and the third mold 3 respectively. For removing the molded substances from the second mold 2 and the third mold 3 respectively, as shown in Fig. 7, ejector pins 115, 116, which are provided at the suitable positions in the second mold 2 and the third mold 3 respectively, are projected towards the molded substances. These ejector pins 115, 116 are operated by driving means, for example, a combination of an air cylinder and a compression coil spring 117, 118.

Then, the two pairs of the fastener tapes 5, 5 are transported downward with the length of the slide fastener chain 10 formed by one-shot injection so that a next molded substance is formed by next one-shot injection. This operation is repeated intermittently in order to form simultaneously two pairs of slide fastener chains 10, 10.

As explained before, Fig. 2 shows the molded substance formed between the first mold 1 and the second mold 2 or between the second mold 2 and the third mold 3 immediately after molding, thus, the molded piece 7 in the runner 14 is attached to the molded fastener elements 6, 6 and the molded piece 8 in the sprue 15 or the path 17 is attached to the molded piece 7 in the runner 14. Therefore, after each molded substance is removed from the mold 2, 3, the molded pieces 7, 8 are removed so as to form the slide fastener chain 10 by a certain well-known suitable method. Then, as shown in Fig. 3, the fastener elements 6, 6 are interengaged by means of a slider to be the slide fastener chain 10.

Fig. 4 shows a modified slide fastener chain having the pair of strings. In the above mentioned slide fastener chain, the pair of rows of fastener elements 6 are molded to be attached to the pair of fastener tapes 5 along their beaded edges, which are provided at their inner edges previously. However, as described before, in this modified slide fastener chain, the pair of rows of fastener elements 6 are molded to be attached to the pair of strings 11, which are not attached to fastener tapes. Next, the weft 12 are entangled with the beaded edges 11. Then, the weft 12 and warp 13 are woven to form this modified slide fastener chain integrally together with the pair of strings 11 as well as the pair of rows of fastener elements 6.

In this embodiment, a hot runner-block can be provided at the first mold 1. This hot runner-block has a heater within for keeping the temperature in the sprue 15 at the melting point of the molten material. Additionally, there is a gap as the heat insulating member between the first mold 1 and the hot runner-block in order to prevent heat conduction from the hot runner-block to the first mold 1.

Fig. 8 shows a cross sectional view of an important part of injection molding apparatus of second embodiment related to the present invention. In this figure, the molds of this apparatus are closed. In this second embodiment, a mold unit comprises a first mold 101, a second mold 102 and a third mold 103. The second mold 102 is a stationary mold, and the first and the third molds 101, 103 are movable molds. The molds 101, 102 and 103 are substantially have the same structures as the above mentioned molds 1, 2 and 3 of the first embodiment with an exception of that a hot runner-block 121 is provided in the second mold 102. This hot runner-block serves like the above mentioned hot runner-block of the first embodiment. In this hot runner-block 121, a T-shaped path 122 is formed so as to be contacted and communicated with the nozzle of an injection cylinder 109. Further, two outlets 123, 123 are provided at the both sides ends of the T-shaped path 122 so as to be communicated with a path 125 and a path 127 for leading the molten material. Then, the paths 125, 127 are communicated each other through the outlets 123, 123 and the T-shaped path 122 to be on one-line. In other words, the T-shaped path 122, the outlets 123, 123, and the paths 125, 127 form a sprue as a whole. In this embodiment, molding operation is carried out in a manner like that of the first embodiment. That is to say, when the molds 101, 102 and 103 are opened, the pair of fastener tapes 5 and the other pair of fastener tapes 5 are transported downward until they are set in the space 130 between the first mold 101 and the second mold 102 and the space 131 between the second mold 102 and the third mold 103 respectively, while their beaded edges are threaded through the rows of cavities respectively. Then, a molten synthetic resin material (or a molten metal material) is shot from the nozzle of the injection cylinder 109 to the sprue 122, 123, 123, 125, 127 and is injected, through runners, into two rows of cavities which are formed between the parting plane of the first mold 101 and the first mold-side parting plane of the second mold 102, and between the third mold-side parting plane of the second mold 102 and the parting plane of the third mold 103. Therefore, two pairs of rows of fastener elements 6, 6 can be simultaneously molded to be attached to two pairs of fastener tapes 5, 5 along their beaded edges respectively. It is needless to say, this apparatus of second embodiment can be used for forming the modified slide fastener chain of Fig. 4. In this case, each space 130, 131 is adjusted to be a portion of each row of cavities 4, as explained for each space 30, 31 in the first embodiment. This injection molding apparatus can be applied to the mechanism for closing the molds of the conventional injection molding machine only by providing the sprue 122, 123, 123, 125, 127 so as to go through from a portion of the peripheral faces of the second mold 102 as the stationary mold to its center, then to be divided in T-shape to be communicated with the runners provided at its both parting plane-sides.

While preferred embodiments have been described, it is apparent that the present invention is not limited to the specific embodiments thereof.

## Claims

1. Continuous injection molding apparatus for slide fastener chains (10) which molds pairs of rows of interengaging elements (6) from a molten material of synthetic resin or metal injected into at least two rows of cavities (4) between molds (1, 2, 3, 101, 102, 103) respectively and which attaches simultaneously said pairs of rows of interengaging elements (6) to pairs of beaded edges of pairs of fastener tapes (5) or to pairs of strings (11) transported intermittently in spaces (30, 31, 130, 131) formed between said molds (1, 2, 3, 101, 102, 103) respectively in a longitudinal direction, said apparatus is characterized by provisions of:

single stationary mold (1, 102) provided with a sprue (15, 122, 123, 123, 125, 127), which is contacted with a nozzle (18) of an injection cylinder (9, 109);

at least two movable molds (2, 3, 101, 103), which are disposed so that opposed parting planes (32, 33, 34, 35) of said stationary mold (1, 102) and of said movable molds (2, 3, 101, 103) are parallel each other; and

said sprue (15, 122, 123, 123, 125, 127), which is communicated with each row of cavities (4) formed between two molds (1, 2, 3, 101, 102, 103) of said at least three molds (1, 2, 3, 101, 102, 103) respectively, through each runner (14) or through each runner (14) and each path (17) of said molten material.

2. Continuous injection molding apparatus according to claim 1, wherein said sprue (15) in said stationary mold (1) is provided so as to go through from the face being opposite to said parting plane (32) of said stationary mold (1) to said runner (14).

3. Continuous injection molding apparatus according to claim 1, wherein said sprue (122, 123, 123, 125, 127) is provided so as to go through from a portion of the peripheral faces of said stationary mold (102) to its center, then to be divided in T-shape to be communicated with said runners provided at its both parting plane-sides.

# FIG. 1

# FIG. 2

# FIG. 3

# FIG. 4

# FIG. 5

# FIG. 6

# FIG. 7

19    2    3

5    5    116

8    8

115    117    118

5    5

19

# FIG. 8

101    102    123    123    103

5

6

125    127

130    131

121    122

109